Europäisches Patentamt

European Patent Office

Office européen des brevets

(19)

(11) **EP 0 943 526 B1**

(12) **EUROPÄISCHE PATENTSCHRIFT**

(45) Veröffentlichungstag und Bekanntmachung des Hinweises auf die Patenterteilung:
**09.07.2003 Patentblatt 2003/28**

(51) Int Cl.$^7$: **B62D 6/00**, B62D 7/15

(21) Anmeldenummer: **99103837.3**

(22) Anmeldetag: **27.02.1999**

(54) **Verfahren zur Unterdrückung hochfrequenter Schwingungen an gelenkten Achsen eines Fahrzeugs**

Method for suppression of high-frequency oscillations on the steering axles of a vehicle

Procédé de suppression des oscillations à fréquence élevée des essieux directeurs de véhicule

(84) Benannte Vertragsstaaten:
**DE ES FR GB IT**

(30) Priorität: **20.03.1998 DE 19812236**

(43) Veröffentlichungstag der Anmeldung:
**22.09.1999 Patentblatt 1999/38**

(73) Patentinhaber: **DaimlerChrysler AG**
**70567 Stuttgart (DE)**

(72) Erfinder: **Suissa, Avshalom**
**71272 Renningen (DE)**

(56) Entgegenhaltungen:
**DE-A- 3 840 101** **US-A- 4 773 012**

**Beschreibung**

Die Erfindung betrifft ein Verfahren zur Unterdrückung hochfrequenter Schwingungen an gelenkten Achsen eines Fahrzeugs mit einer Regeleinrichtung zum Einregeln eines Lenkwinkels nach dem Oberbegriff von Anspruch 1, wie sie beispielsweise aus der DE 42 26 746 A1 als bekannt hervorgeht.

In der DE 43 35 413 A1 ist ein Verfahren beschrieben, das es erlaubt, in einer Recheneinrichtung einen fahrsituationsabhängigen Lenkwinkel zu ermitteln, wobei aufgrund des vom Fahrer am Betätigungsmittel Lenkrad erzeugten Lenkradwinkels sowie der Gierwinkelgeschwindigkeit als eine der das Fahrverhalten charakterisierenden Größe ein Sollwert des Lenkwinkels ermittelt wird.

Eine solche aktive Lenkung hat den Vorteil, daß der Bereich der beherrschbaren Fahrzustände im Rahmen des physikalisch Möglichen erweitert wird. Nachteilig ist jedoch, daß aufgrund der Regelung des Lenkwinkels, der Lenksteifigkeit und des Einlaufverhaltens des Rades hochfrequente Schwingungen des Rades um seine Hochachse entstehen. Das Auftreten dieser Schwingungen wird als Shimmy-Effekt bezeichnet.

Dem Auftreten dieses Effektes könnte durch Tiefpaßfilter für den Sollwert des Lenkwinkels entgegengewirkt werden. Dies hat aber den Nachteil, daß sich die Bandbreite der Regelung des Lenkwinkels und somit dessen Regelqualität verschlechtert. Unabhängig von der Regelung des Lenkwinkels können die hochfrequenten Schwingungen auch durch Bremsbetätigung angeregt werden.

Aufgabe der Erfindung ist es, das Auftreten des Shimmy-Effekts zuverlässig und zugleich ohne Beeinträchtigung der Regelqualität des Lenkwinkels zu verhindern.

Diese Aufgabe wird bei einer gattungsgemäßen Regelung des Lenkwinkels erfindungsgemäß mit den kennzeichnenden Merkmalen des Anspruchs 1 gelöst, wobei die Merkmale der Unteransprüche vorteilhafte Aus- und Weiterbildungen kennzeichnen.

Einer Regeleinrichtung wird ein Sollwert für den Lenkwinkel zugeführt. Die Regeleinrichtung regelt den Sollwert an der ihr zugeordneten gelenkten Achse ein. Der Sollwert wird in einer Recheneinrichtung ermittelt, wobei außer dem durch den Fahrer vorgegebenen Lenkwinkel und das Fahrverhalten charakterisierender Größen auch ein aufgrund eines Modells für die Lenkung ermittelter Wert der Lenkgeschwindigkeit als Eingangsgrößen zugeführt wird.

Gemäß Ausgestaltungen der Erfindung wird zum Ermitteln der Lenkgeschwindigkeit die Seitenkraft an den gelenkten Rädern und/oder der Sollwert des Lenkwinkels herangezogen. In weiterer Ausgestaltung der Erfindung kann außer der Lenkgeschwindigkeit auch die Lenkbeschleunigung ermittelt und dem Sollwertermittler zugeführt werden.

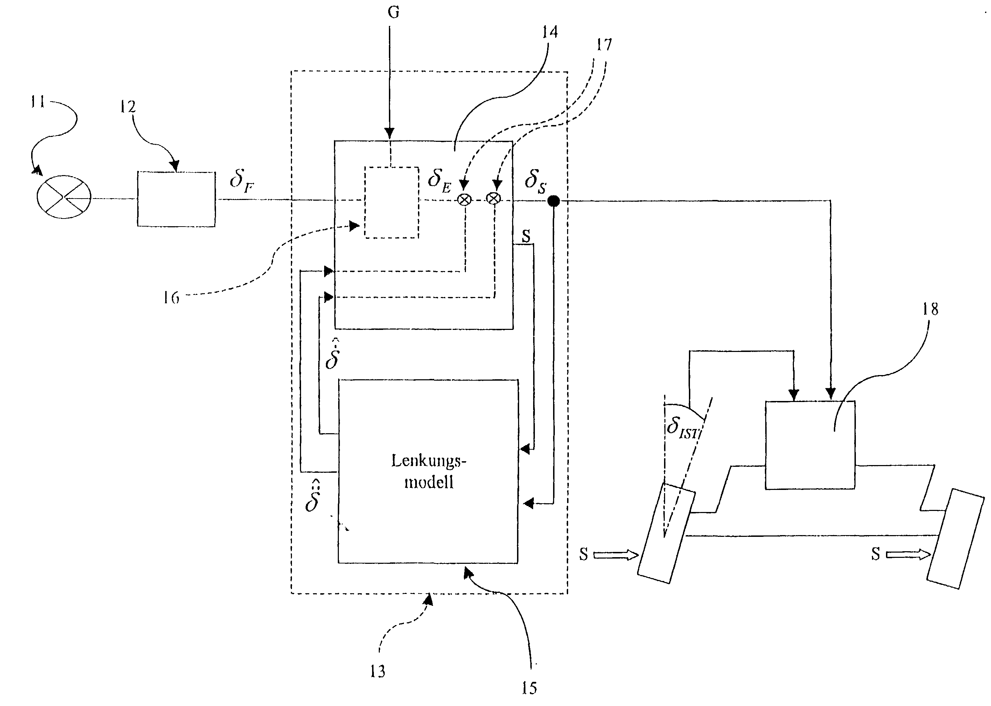

Im übrigen ist die Erfindung anhand eines in der Zeichnung dargestellten Ausführungsbeispieles nachfolgend noch erläutert; dabei zeigt die einzige Figur eine schematische Darstellung eines erfindungsgemäßen Reglers.

Der Fahrer lenkt das Fahrzeug über das Betätigungsmittel 11, ein Lenkrad. Der Wandler 12 wandelt die vom Fahrer erzeugte Eingabe in ein elektrisches Signal, das den Lenkradwinkel $\delta_F$ repräsentiert. Dieses Signal wird der Recheneinrichtung 13 zugeführt. Die Recheneinrichtung 13 weist zwei Funktionsblöcke auf. Zum einen ist dies der Sollwertermittler 14, zum anderen das Lenkungsmodell 15. Der Recheneinrichtung 13 werden auch Signale G zugeführt, die das Fahrverhalten des Fahrzeugs repräsentieren, beispielsweise die Giergeschwindigkeit $\dot{\Psi}$ und die Raddrehzahl $\omega_i$ der Räder. Aufgrund dieser Signale G sowie aufgrund des Lenkradwinkels $\delta_F$ wird im Block 16 ein Wert $\delta_E$ für den Lenkwinkel der gelenkten Räder der Achse ermittelt. Dieser wird in den Verknüpfern 17 mit der geschätzten Lenkgeschwindigkeit $\hat{\dot{\delta}}$ und der Lenkbeschleunigung $\hat{\ddot{\delta}}$ verknüpft. Der daraus resultierende Sollwert $\delta_S$ des Lenkwinkels wird der Regeleinrichtung 18 zum Einregeln des Lenkwinkels an der gelenkten Achse und - innerhalb der Recheneinrichtung 13 - dem Lenkungsmodell 15 zugeführt. Der Lenkregler regelt den Sollwert $\delta_S$ für den Lenkwinkel an den Rädern ein, dazu wird ihm der Istwert des Lenkwinkels der Räder $\delta_{IST}$ zugeführt.

Zur Ermittlung der Schätzwerte für Lenkgeschwindigkeit $\hat{\dot{\delta}}$ und Lenkbeschleunigung $\hat{\ddot{\delta}}$ wird dem Lenkungsmodell 15 zusätzlich noch ein Wert für die Seitenkraft S an der gelenkten Achse zugeführt. Der Wert für die Seitenkraft S kann beispielsweise von dem Sollwertermittler 14 stammen, sofern dieser Wert bei der Ermittlung des Wertes für den Sollwert $\delta_S$ für den Lenkwinkel berechnet oder geschätzt wird. Andernfalls kann sie auch aus den das Fahrverhalten den charakterisierenden Größen Querbeschleunigung $a_y$ und Giergeschleunigung $\dot{\Psi}$ nach der Gleichung

$$ S = \frac{l_h a_y m + I_z \ddot{\Psi}}{l_v + l_h} $$

ermittelt werden, wobei m die Masse des Fahrzeugs, $l_v$ und $l_h$ die Abstände der Vorderachse bzw. der Hinterachse vom Schwerpunkt des Fahrzeugs und $l_z$ das Trägheitsmoment des Fahrzeugs um die Hochachse sind.

Es wird nun für das Beispiel einer gelenten, nicht angetriebenen Vorderachse dargestellt, wie in dem Lenkrungsmodell 15 die Schätzwerte ermittelt werden können und wie diese Werte mit dem in dem Block 16 ermittelten Wert $\delta_E$ für den Lenkwinkel verknüpft werden können um den Sollwert $\delta_S$ zu ergeben.

Aus den an den Rädern der Vorderachse angreifenden Momenten ergibt sich die Differentialglei-

chung

$$I_{Rad}\ddot{\delta} = -k_D\dot{\delta} + c_L(\delta_S - \delta) - n_K S \; ;$$

wobei $k_D$ die für das Rad charakteristische Dämpfungskonstante, $c_L$ die Lenksteifigkeit und $n_K$ den Nachlauf bezeichnet. Dämpfungskonstante und Lenksteifigkeit sowie das Trägheitsmoment des Rades sind konstante Werte, die als bekannte Größen abspeicherbar sind.

Nur der letzte Term $-n_K S$ der Gleichung beruht auf der Tatsache, daß auf das Rad eine Seitenkraft einwirkt, die anderen beiden Terme beruhen auf den unerwünschten Störungen. Somit ergibt sich für die Lenkbeschleunigung

$$\ddot{\hat{\delta}} = -\frac{n_K S}{I_{Rad}} + \frac{c_L}{I_{Rad}}(\delta_S - \delta) - \frac{k_D}{I_{Rad}}\dot{\delta} \; .$$

Durch Integration erhält man dann folgenden Ausdruck für die Schätzwerte von Lenkgeschwindigkeit und Lenkwinkel:

$$\dot{\hat{\delta}} = \dot{\hat{\delta}}_{ALT} + \ddot{\hat{\delta}} \cdot dt \; ,$$

$$\hat{\delta} = \hat{\delta}_{ALT} + \dot{\hat{\delta}} \cdot dt \; ,$$

die im Rechner beispielsweise durch numerische Integration nach dem Eulerverfahren ermittelt werden können. Dabei sind $\dot{\hat{\delta}}_{ALT}$ und $\delta_{ALT}$ die Werte der Größen des vorangegangenen Regelzyklus.

Diese geschätzten Werte Lenkgeschwindigkeit $\dot{\hat{\delta}}$ und der Lenkbeschleunigung $\ddot{\hat{\delta}}$ können nun dem Sollwertermittler zugefüht werden. Dort werden die Verknüpfer 17 herangezogen um dzz dem Wert $\delta_E$ Terme hinzuzuaddieren, die der Lenkbeschleunigung und der Lenkgeschwindigkeit Rechnung tragen. Man erhält somit den Ausdruck für den Sollwert $\delta_S$

$$\delta_S = \delta_E + \varepsilon_1 \dot{\hat{\delta}} + \varepsilon_2 \ddot{\hat{\delta}} \; ,$$

wobei $\varepsilon_1$ und $\varepsilon_2$ Rückführungskonstanten sind, deren Werte im Fahrzeug abgestimmt werden müssen.

## Patentansprüche

1. Verfahren zur Unterdrückung hochfrequenter Schwingungen an gelenkten Achsen eines Fahrzeugs,

- • wobei an der gelenkten Achse eine Regeleinrichtung (18) zum Einregeln eines Lenkwinkels in Abhängigkeit eines ermittelten Sollwertes ($\delta_S$) angreift,
- • mit einer Recheneinrichtung (13) in der in einem Sollwertermittler (14) aufgrund
- • eines vom Fahrer an einem Betätigungsmittel (11) vorgegebenen Lenkradwinkels ($\delta_F$) und
- • wenigstens einer das Fahrverhalten des Fahrzeugs charakterisierenden Größe (G)

ein Sollwert ($\delta_S$) für den Lenkwinkel ermittelt und der Regeleinrichtung zugeführt wird, **dadurch gekennzeichnet** **daß** in der Recheneinrichtung (13) aufgrund eines Modells (15) für die Lenkung wenigstens ein Wer für die Lenkgeschwindigkeit ($\dot{\hat{\delta}}$) ermittelt und dem Sollwertermittler als weitere Eingangsgröße zugeführt wird.

2. Verfahren nach Anspruch 1, **dadurch gekennzeichnet** **daß** zum Ermitteln des Wertes der Lenkgeschwindigkeit ($\dot{\hat{\delta}}$) als Eingangsgröße wenigstens der Sollwert ($\delta_S$) des Lenkwinkels herangezogen wird.

3. Verfahren nach Anspruch 2, **dadurch gekennzeichnet** **daß** als Sollwert ($\delta_S$) des Lenkwinkels der im vorangegangenen Regelzyklus ermittelte Lenkwinkel ($\delta_{ALT}$) herangezogen wird.

4. Verfahren nach Anspruch 1 oder 2, **dadurch gekennzeichnet** **daß** zum Ermitteln des Wertes der Lenkgeschwindigkeit ($\dot{\hat{\delta}}$) als Eingangsgröße wenigstens ein Wer für die Seitenkraft (S) der gelenkten Achse herangezogen wird.

5. Verfahren nach einem der Ansprüche 1 bis 4, **dadurch gekennzeichnet** **daß** zusätzlich zur Lenkgeschwindigkeit ($\dot{\hat{\delta}}$) auch die Lenkbeschleunigung ($\ddot{\hat{\delta}}$) ermittelt und dem Sollwertermittler (14) als Eingangsgröße zugeführt wird.

## Claims

1. Method of suppressing high-frequency oscillations on steered axles of a motor vehicle,

- · whereby a control system (18) at the steered axle intervenes to regulate a steering angle depending on a derived desired value ($\delta_F$),
- · having a computer (13) in which a desired value

($\delta_S$) for the steering angle is determined in a desired value calculator (14) on the basis of

- a steering wheel angle ($\delta_F$) specified by the driver at an operating means (11) and
- at least one variable (G) characterising the driving behaviour of the vehicle.

and forwarded to the control system,

**characterised in that**
at least one value for the steering rate ($\hat{\dot{\delta}}$) is determined in the computer (13) on the basis of a model (15) for the steering and forwarded to the desired value calculator as an additional input variable.

2. Method as claimed in claim 1,
**characterised in that**
at least the desired value ($\delta_S$) of the steering angle is applied as an input variable for determining the value of the steering rate ($\hat{\dot{\delta}}$).

3. Method as claimed in claim 2,
**characterised in that**
the steering angle ($\delta_{OLD}$) determined in the preceding control cycle is applied as the desired value ($\delta_S$) of the steering angle.

4. Method as claimed in claim 1 or 2,
**characterised in that**
at least a value for the lateral force (S) of the steered axle is used for determining the value of the steering rate ($\hat{\dot{\delta}}$).

5. Method as claimed in one of claims 1 to 4,
**characterised in that**
in addition to the steering rate ($\hat{\dot{\delta}}$), the steering acceleration ($\hat{\ddot{\delta}}$) is also determined and forwarded to the desired value calculator (14) as an input variable.

**Revendications**

1. Procédé pour la suppression d'oscillations à fréquence élevée des essieux directeurs d'un véhicule, où un dispositif de réglage (18) est en prise avec les essieux directeurs pour le réglage d'un angle, de direction en fonction d'une valeur théorique ($\delta_s$), avec un dispositif de calcul (13) dans le détecteur de valeur théorique (14) duquel est déterminée une valeur théorique ($\delta_s$) pour l'angle de direction sur la base d'un angle de direction du volant ($\delta_f$) imposé par le conducteur à un moyen d'actionnement (11) et sur la base d'au moins une grandeur (G) caractéristique du comportement du véhicule lors de la conduite, laquelle valeur est acheminée au dispositif de réglage, **caractérisé en ce que** dans le dispositif de calcul (13) est déterminée au moins une valeur pour la vitesse de renvoi de direction ($\hat{\dot{\delta}}$) sur la base d'un modèle (15) pour le renvoi de direction, qui est acheminée au détecteur de valeur théorique en tant qu'autre grandeur d'entrée.

2. Procédé selon la revendication 1, **caractérisé en ce que** pour la détermination de la valeur de la vitesse de renvoi de direction ($\hat{\dot{\delta}}$), au moins la valeur théorique ($\delta_s$) est prise en compte en tant que valeur d'entrée.

3. Procédé selon la revendication 2, **caractérisé en ce que** la valeur théorique ($\delta_s$) de l'angle de direction de l'angle de direction ($\delta_{Vieux}$) déterminé lors du dernier cycle de réglage est prise en compte.

4. Procédé selon les revendications 1 ou 2, **caractérisé en ce que** pour la détermination de la valeur de la vitesse de renvoi de direction ($\hat{\dot{\delta}}$), au moins une valeur pour la force latérale (S) de l'essieu directeur est prise en compte en tant que valeur d'entrée.

5. Procédé selon l'une quelconque des revendications 1 à 4, **caractérisé en ce que**, en plus de la vitesse de renvoi de direction ($\hat{\dot{\delta}}$), l'accélération du renvoi de direction ($\hat{\ddot{\delta}}$) est déterminée et acheminée au détecteur de valeur théorique (14) en tant que valeur d'entrée.

G

14

17

11

12

$\delta_F$

$\delta_E$

$\delta_S$

16

S

18

$\hat{\dot{\delta}}$

$\hat{\ddot{\delta}}$

Lenkungs-modell

$\delta_{IST}$

S

S

13

15